# EUROPEAN PATENT APPLICATION

(11) **EP 3 937 295 A1**
(43) Date of publication of application: **12.01.2022**
(21) Application number: 20766615.7
(22) Date of filing: 27.02.2020
(51) Int. Cl.: H01M 10/617, H01M 2/02

(54) **BATTERY PACK**

(30) Priority: 05.03.2019 CN 201910163154; 05.03.2019 CN 201920274476 U
(71) Applicant: Aiways Automobile Co., Ltd, Jiangxi 334000 (CN)
(72) Inventor: JIANG, Shengli, Shangrao, Jiangxi 334000 (CN)
(74) Representative: Manitz Finsterwald Patent- und Rechtsanwaltspartnerschaft mbB
(86) International application number: PCT/CN2020/076918
(87) International publication number: WO 2020/177606

(57) **Abstract**

Provided is a battery pack, comprising: a battery module comprising multiple battery units arranged in an array; a battery pack case comprising cross beams and longitudinal beams defining multiple module accommodation spaces, thermal insulation layers being provided at the cross beam and the longitudinal beam close to an accessory accommodation space, the accessory accommodation space accommodating a battery management system and a high-voltage electrical equipment box; and a lower cover thermal insulation layer provided at a side of the battery pack case away from the battery module, wherein the projection of the lower cover thermal insulation layer on a plane in which the battery module is located covers at least the outermost battery units at four sides of the battery module. The battery pack of the present invention has a thermal insulated case structure, thereby enhancing thermal insulation performance while reducing thermal insulation costs. Thermal insulation processing is performed at regions of the case housing battery modules more likely to be affected by the ambient temperature, thereby minimizing the use of a thermal insulation material. The invention aims to improve battery modules having poor thermal insulation performance so as to realize thermal insulation and maintain a uniform temperature.

## Description

### TECHNICAL FIELD

The present application relates to the field of battery pack technology, and particularly to a battery pack capable of implementing a function of thermal insulation.

### BACKGROUND

A large temperature difference of lithium-ion power battery may directly cause some defects: (1) the battery attenuation is inconsistent, and even the battery aging accelerated; (2) the estimation error of the battery state is larger, even the vehicle is unable to travel; (3) the cooling/heating efficiency of the battery pack is lowered, the pre-cooling/pre-heating time is prolonged, the energy consumption is increased, and even the vehicle is unable to drive, and there may be risks in severe cases, such as fire, explosion and the like.

Too low battery temperature may reduce the available capacity and the available power of the battery. When the vehicle is sold and used in colder areas, in order to reduce the impact of the low temperature on the available capacity and available power of the battery, the battery pack needs to be equipped with an insulation structure.

The higher battery temperature can accelerate the aging of the battery. In the hot summer environment, for a vehicle equipped with a battery pack with a liquid cooling system, when the vehicle is powered off, the environment may heat the battery, causing the battery temperature to even exceed 40°C.

Therefore, for the power battery, whether the temperature is too high, or too low, or the temperature difference is too large, it may have a great adverse effect on the performances of the power battery and even the vehicle.

### SUMMARY

In view of this, as for the above technical problem in the related art, the purpose of the present invention is to provide a battery pack with a structure of a thermal insulation box body, which can improve the thermal insulation effect of the battery pack and reduce the cost of the thermal insulation by adding the thermal insulation layer.

In an embodiment, the present invention provides a battery pack, including:
a battery module, including a plurality of battery units arranged in an array;
a battery pack box body, including a plurality of transverse beams and a plurality of longitudinal beams, the plurality of transverse beams and the plurality of longitudinal beams defining a plurality of module receiving spaces, and the battery module is provided in the module receiving space; and
a lower cover thermal insulation layer, provided on a side of the battery pack box body opposite to the battery module, and a projection of the lower cover thermal insulation layer on a plane where the battery module is located at least covers outermost battery units distributed on four sides of the battery module.

Optionally, the lower cover thermal insulation layer is a ring-shaped thermal insulation layer, and the projection of the lower cover thermal insulation layer on the plane where the battery module is located covers the outermost battery units distributed on the four sides of the battery module.

Optionally, the battery pack box body further includes an accessory receiving space, the accessory receiving space is configured to receive a battery management system and a high-voltage electrical box, the accessory receiving space is provided on a first side of the module receiving space, a projection of a first side of the lower cover thermal insulation layer on the plane where the battery module is located covers the accessory receiving space and the battery units in the battery module closest to the accessory receiving space.

Optionally, a longitudinal beam includes a first longitudinal beam and a second longitudinal beam, a transverse beam includes a first transverse beam, a second transverse beam and a third transverse beam which are located on a first side of the battery pack box body and arranged in sequence, the first transverse beam, the second transverse beam and the longitudinal beam define the accessory receiving space, the second transverse beam, the third transverse beam and the longitudinal beam define a first module receiving space.

Optionally, the second transverse beam is provided with a transverse beam thermal insulation layer, the transverse beam thermal insulation layer is provided to abut against a side of the second transverse beam, or the transverse beam thermal insulation layer is provided to abut against two sides of the second transverse beam.

Optionally, a height of the transverse beam thermal insulation layer is higher than a height of the second transverse beam, and the transverse beam thermal insulation layer extends to be in contact with an upper cover of the battery pack, and an upper portion of the transverse beam thermal insulation layer is provided with at least one wiring slot and/or at least one wiring hole.

Optionally, the longitudinal beam is provided with a longitudinal beam inner side thermal insulation layer at positions corresponding to the accessory receiving space and the first module receiving space, the longitudinal beam inner side thermal insulation layer is provided to abut against to an inner side of the corresponding longitudinal beam;
a length of the longitudinal beam inner side thermal insulation layer is substantially equal to a distance between the first transverse beam and the third transverse beam.

Optionally, the transverse beam thermal insulation layer and the longitudinal beam inner side thermal insulation layer are integrally provided.

Optionally, the longitudinal beam includes a hollow internal cavity, the longitudinal beam is provided with a longitudinal beam internal cavity thermal insulation layer at a position corresponding to the first module receiving space, and the longitudinal beam internal cavity thermal insulation layer is provided in an internal cavity of the longitudinal beam.

Optionally, an outer side of the longitudinal beam is provided with a protruding portion, the protruding portion is a fixing end configured to mount and fix the battery pack on a vehicle body, the protruding portion includes a hollow internal cavity, the longitudinal beam is provided with a longitudinal beam external cavity thermal insulation layer at a position corresponding to the first module receiving space, and the longitudinal beam external cavity thermal insulation layer is provided in the internal cavity of the protruding portion.

Optionally, an outside of the protruding portion is provided with a longitudinal beam outside thermal insulation layer, the longitudinal beam outside thermal insulation layer partially covers an outer surface of the protruding portion and the outer side of the longitudinal beam;
a length of the longitudinal beam outside thermal insulation layer is substantially equal to a distance between the first transverse beam and the third transverse beam.

It should be understood that the above general description and the following detailed description are only exemplary and explanatory, cannot limit the present invention.

The battery pack provided by the present invention has the following advantages.

The present invention provides a battery pack with a structure of a thermal insulation box body, which greatly improves the thermal insulation effect while reducing the cost of the thermal insulation, in which the position in the box body where the battery modules greatly affected by the environment temperature are located is insulated by using as fewer thermal insulation materials as possible as the premise, the focus is on improving battery modules with lower thermal insulation performance, so as to achieve thermal insulation and temperature equalization; the structure is simple and the practicability is strong, with little increased material cost. At the same time, the structure of the thermal insulation box body of the battery pack with the functions of thermal insulation and temperature equalization can be used in combination, which can achieve better thermal insulation and temperature equalization effect without increasing structural complexity and material cost. (The battery pack 1 used in the simulation comparison in the specific embodiment is a battery pack with a structure of a thermal insulation box body having the functions of thermal insulation and temperature equalization).

### BRIEF DESCRIPTION OF THE DRAWINGS

By reading the detailed description of the non-restrictive embodiments with reference to the following accompanying drawings, other features, purposes and advantages of the present invention will become more apparent.
FIG. 1 is a schematic structure diagram of a battery pack.
FIG. 2 is a schematic diagram illustrating a distribution of each battery unit in a battery module.
FIG. 3 is a schematic diagram illustrating heat exchange between a battery module and an environment.
FIG. 4 is a schematic structure diagram of a battery pack according to an embodiment of the present invention.
FIG. 5 is a schematic diagram illustrating a distribution of each receiving space according to an embodiment of the present invention.
FIGS. 6 to 8 are schematic diagrams illustrating three different shapes of a thermal insulation layer of a lower cover according to embodiments of the present invention.
FIGS. 9 and 10 are schematic diagrams of adding a thermal insulation layer at a second transverse beam according to embodiments of the present invention.
FG. 11 is a schematic diagram illustrating a transverse beam thermal insulation layer and a longitudinal beam inner side thermal insulation layer which are formed in one piece according to an embodiment of the present invention.
FIG. 12 is a cooling curve diagram of the battery pack structure in FIG. 1.
FIG. 13 is a cooling curve diagram of a battery pack structure according to an embodiment of the present invention.

### Reference signs:

1, upper cover; 423, protruding portion;
21, battery module; 43, transverse beam thermal insulation layer;
22, battery accessory; 431, wiring slot;
3, thermal conductive layer; 432, wiring hole;
4, battery pack box body; 44, longitudinal beam inner side thermal insulation layer;
41, transverse beam; 45, longitudinal beam outside thermal insulation layer;
411, first transverse beam; 46, longitudinal beam internal cavity thermal insulation layer;
412, second transverse beam; 47, longitudinal beam external cavity thermal insulation layer;
413, third transverse beam; 48, module receiving space;
414, fourth transverse beam; 481, first module receiving space;
415, fifth transverse beam; 49, accessory receiving space;
416, sixth transverse beam; 5, liquid cooling component;
42, longitudinal beam; 6, lower cover;
421, first longitudinal beam; 7, lower cover thermal insulation layer;
422, second longitudinal beam.

### DETAILED DESCRIPTION

Exemplary embodiments will be described below more fully with reference to the accompanying drawings. However, the exemplary embodiments can be implemented in various forms, and should not be construed as being limited to the examples set forth herein. Rather, these embodiments make the present invention more comprehensive and complete, and fully convey the concept of the exemplary embodiments to those skilled in the art. The described features, structures or characteristics can be combined in one or more embodiments in any appropriate manner.

In addition, the accompanying drawings are only schematic illustrations of the present invention, and are not necessarily drawn to scale. The same reference numerals in the figures denote the same or similar parts, and thus the repeated description thereof will be omitted.

In order to solve the above technical problem, an embodiment of the present invention provides a battery pack, and the battery pack includes: a battery module including a plurality of battery units arranged in an array; a battery pack box body including a plurality of transverse beams and a plurality of longitudinal beams, the plurality of transverse beams and the plurality of longitudinal beams define a plurality of module receiving spaces, and the battery module is arranged in the module receiving space; and a lower cover thermal insulation layer arranged on a side of the battery pack box body opposite to the battery module, and a projection of the lower cover thermal insulation layer on a plane where the battery module is located at least covers the outermost battery units on four sides of the battery module.

Considering that the outermost battery units in the battery module are the part most easily affected by the environment, in the present invention, the thermal insulation structure is designed in combination with the structure of the battery pack, which reduces the cost of the thermal insulation while improving the effect of the thermal insulation, the position in the box body where the battery module greatly affected by the environmental temperature is located is insulated, and the premise is to use as little thermal insulation material as possible, the battery module with lower thermal insulation performance is mainly improved, and accordingly the increased material cost is very small.

The structure and thermal insulation principle of the battery pack of the present invention will be further introduced below in conjunction with the various drawings.

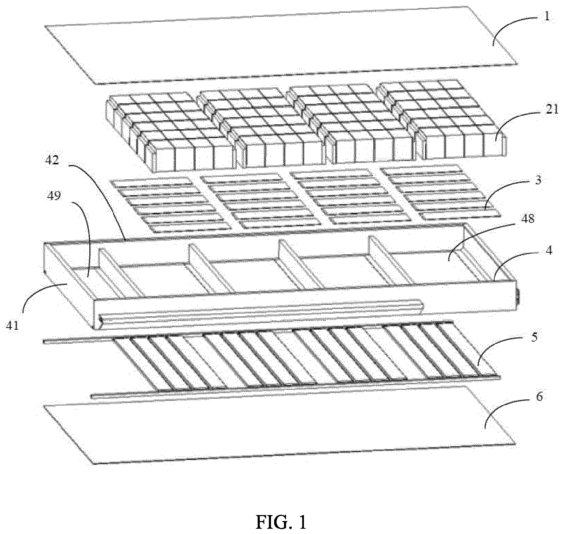

As shown in FIG. 1, it shows a basic structure of a battery pack. The battery pack includes: an upper cover 1, a battery module 21, a thermal conductive layer 3, a battery pack box body 4, a liquid cooling component 5 and a lower cover 6. The battery pack box body 4 includes a plurality of transverse beams 41 and a plurality of longitudinal beams 42. The plurality of transverse beams 41 and the plurality of longitudinal beams 42 define a plurality of module receiving spaces 48, and the battery modules 21 are arranged in the module receiving spaces 48. The projections of the upper cover 1 and the lower cover 6 on the plane where the battery modules 21 are located cover the battery modules 21. The liquid cooling component 5 can cool the battery modules 21 through the circulating liquid; and the battery modules 21 exchange heat with the liquid cooling components 5 through the thermal conductive layer 3 and isolation plates each of which is distributed on a bottom surface of each module receiving space 48.

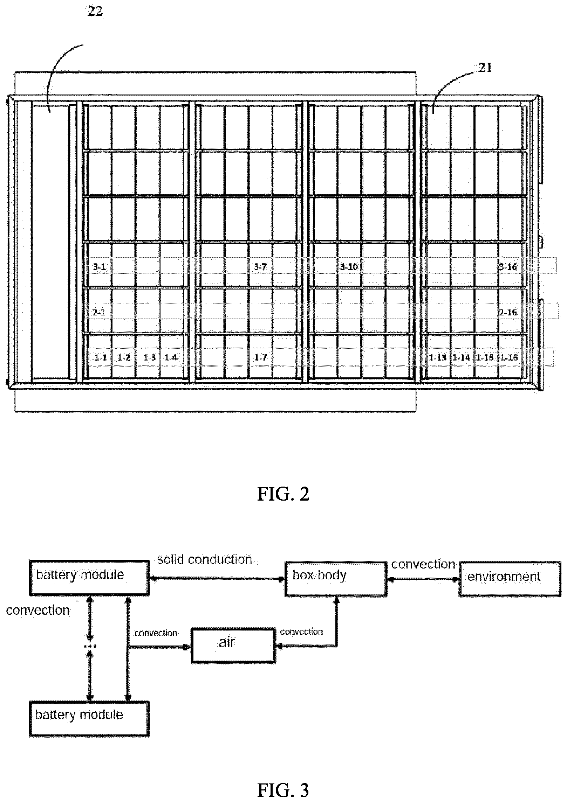

As shown in FIG. 2, it is a distribution diagram of battery units in battery modules in a battery pack. The battery units are arranged in an array with multiple rows and multiple columns. As shown in FIG. 2, the leftmost column of battery units (battery units 1-1, 2-1, 3-1, etc.) is defined as a first column of battery units, which is the outermost battery unit on the first side. A bottom row of battery units (battery units 1-1, 1-2, 1-3, etc.) is a first row of battery units, which is the outermost battery unit on a second side. A top row of battery units is the last row of battery units, which is the outermost battery unit on a third side. The rightmost column of battery units (battery units 1-16, 2-16, 3-16, etc.) is the last column of battery units, which is the outermost battery unit on a fourth side. Here, the battery unit can refer to a single battery cell, or a small battery unit formed by a group of multiple battery cells.

As shown in FIG. 3, it is a schematic diagram of heat exchange between the battery modules in the battery pack and the environment. A convection effect exists between the battery modules, and also exists between the battery modules and the air. A solid heat conduction effect exists between the battery modules and the box body, and the convection effect exists between the box body and the environment as well as the air.

The modules in the battery pack that are most susceptible to the environment are the outermost battery units on the four sides, that is, the first column, the last column, the first row, and the last row of battery units in FIG. 2. In addition, compared to the last column of battery units, on the front side of the first row of battery units is further provided a battery accessory 22, resulting in that an effective heat dissipation area of the box body shared by the first column of battery units is larger than the effective heat dissipation area of the box body shared by the last column of battery modules. Here, the battery accessory 22 refers to other important components in the battery pack except the battery module 21, such as a battery management system, a high-voltage electrical box body, and so on.

Therefore,
(1) the impact of the environment on the first column of battery units > the impact of the environment on the last column of battery units > the impact of the environment on other columns of battery units;
(2) the impact of the environment on the first row of battery units = the impact of the environment on the last row of battery units > the impact of the environment on other columns of battery units.

Therefore, in order to improve the heat preservation effect and the temperature difference and meanwhile reduce the cost of the heat preservation, in the present invention a position in the box body where the battery unit is greatly affected by the environment is insulated.

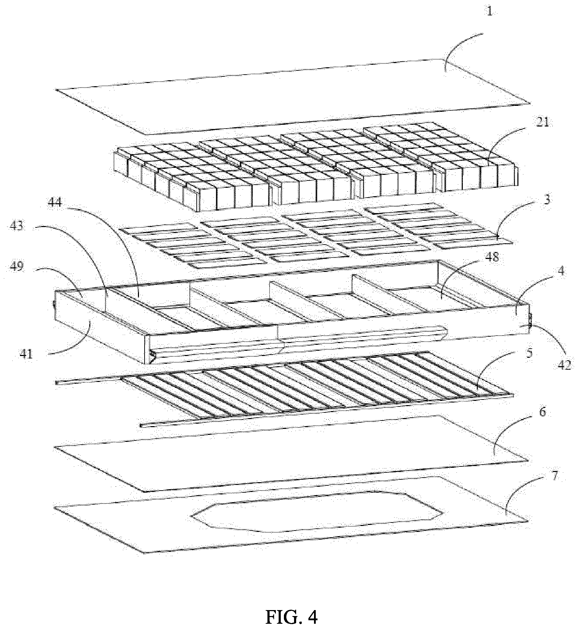

As shown in FIG. 4, it is a schematic structure diagram of a battery pack according to an embodiment of the present invention. A lower cover thermal insulation layer 7 is added under the lower cover 6; and a projection of the lower cover thermal insulation layer 7 on a plane where the battery module 21 is located at least covers the outermost battery units distributed on the four sides of the battery module 21. In this embodiment, the lower cover thermal insulation layer 7 is an annular thermal insulation layer; and the projection of the lower cover thermal insulation layer 7 on the plane where the battery module 21 is located covers the outermost battery units distributed on the four sides of the battery module 21, i.e., the first column of battery units, the second column of battery units, the first row of battery units, and the second row of battery units.

In this embodiment, corresponding to the position of the battery accessory 22, the box body of the battery pack 4 further includes an accessory receiving space 49 configured to receive the battery accessory 22. The accessory receiving space 49 is provided at a first side of the module receiving space 48. A projection of a first side of the lower cover thermal insulation layer 7 on a plane where the battery module is located covers the accessory receiving space 49 and the battery units in the battery module 21 closest to the accessory receiving space 49, that is, in the perspective of FIG. 4, the left side of the lower cover thermal insulation layer 7 covers the accessory receiving space 49 and the first column of battery units.

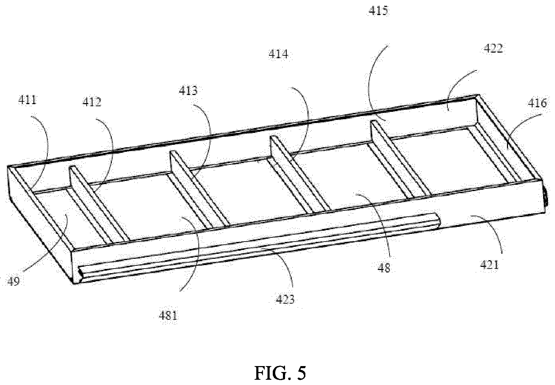

As shown in FIG. 5, the longitudinal beam 42 includes a first longitudinal beam 421 and a second longitudinal beam 422. The transverse beam 41 includes a first transverse beam 411, a second transverse beam 412 and a third transverse beam 413 sequentially arranged on the first side of the battery pack box body. The first transverse beam 411, the second transverse beam 412 and the longitudinal beam 42 define the accessory receiving space 49. The second transverse beam 412, the third transverse beam 413 and the longitudinal beam 42 defines the first module receiving space 481. The number of the transverse beams 41 can be selected and adjusted as required. For example, in this embodiment, there may include a fourth transverse beam 414, a fifth transverse beam 415, and a sixth transverse beam 416, but the present invention is not limited thereto. The number of the longitudinal beams 42 can also be increased as required to form a multi-row module receiving space 48, etc., which all fall within the protection scope of the present invention.

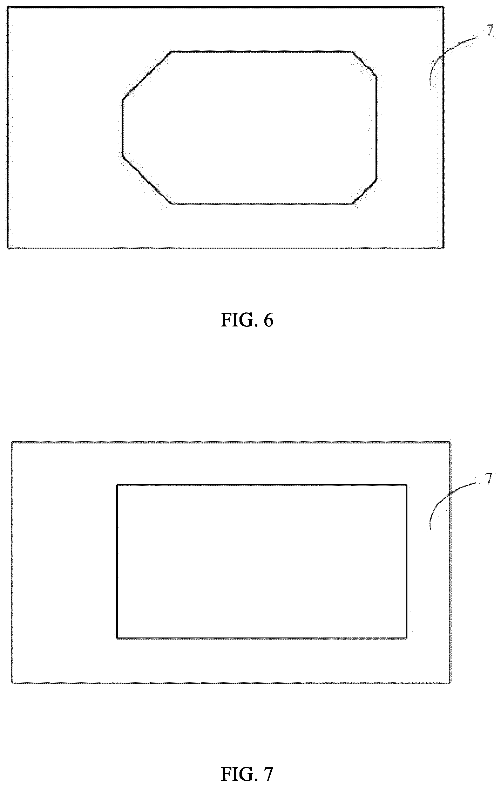

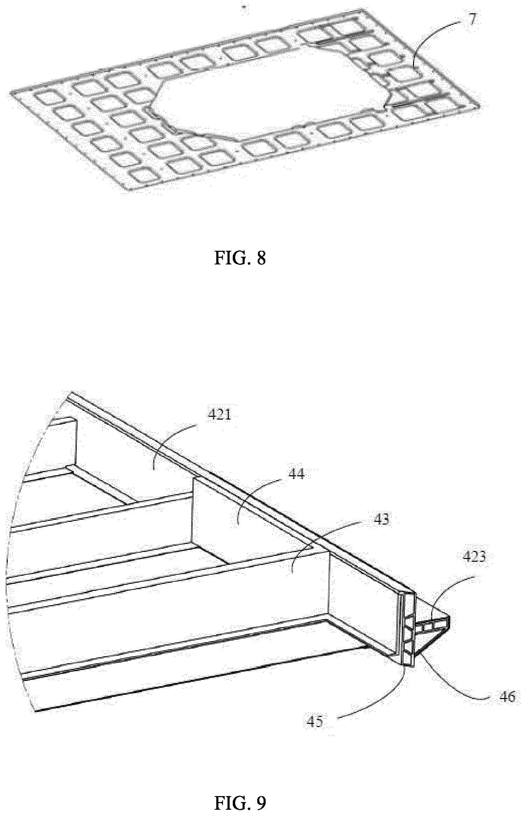

As shown in FIGS. 6 to 8, the structure of the lower cover thermal insulation layer 7 can have various shapes, and is not limited to the shape shown in the figures. FIG. 8 shows an improved structure of a lower cover thermal insulation layer 7 adapted to a lower cover 6 of a battery pack. specifically, there is no need to set a lower cover thermal insulation layer under the battery units in the middle which are less affected by the environment. The shape and size of the lower cover thermal insulation layer 7 can be determined through simulation optimization, and the thickness can be selected to be greater than 2 mm, but the present invention is not limited hereto. The thermal insulation cotton can be used for the lower cover thermal insulation layer 7, such as hard foamed cotton, to facilitate the installation and disassembly.

Further, in this embodiment, since the effective heat dissipation area of the box body shared by the first column of battery units is larger than the effective heat dissipation area of the box body shared by the last column of battery units, and a thermal insulation layer is further added at the first column of battery units, it is implemented that a thermal insulation measure for the position in the box body where the first column of battery units is located is stronger than a thermal insulation measure for the position in the box body where the last column of battery modules is located.

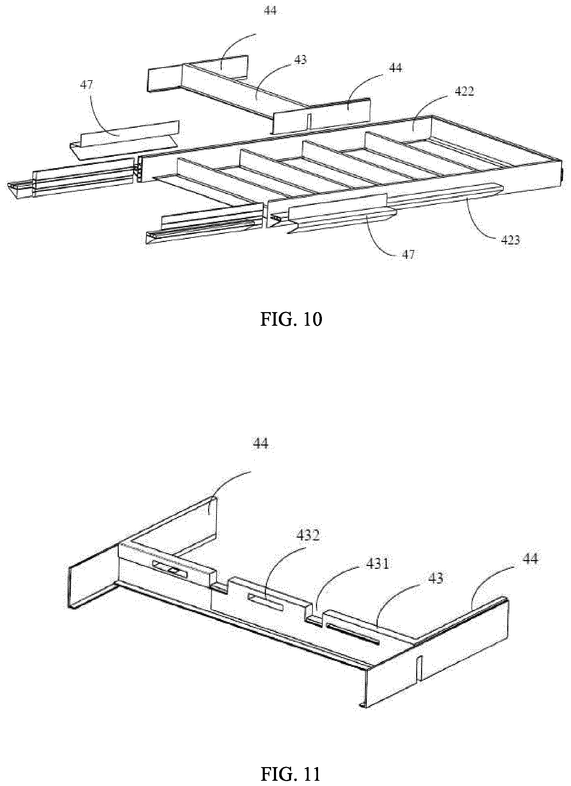

As shown in FIGS. 9 and 10, structures of adding a transverse beam thermal insulation layer and a longitudinal beam thermal insulation layer are shown. For the convenience of display, the first transverse beam 411 is hidden in FIGS. 9 and 10. The second transverse beam 412 is provided with a transverse beam thermal insulation layer 43. The transverse beam thermal insulation layer 43 is provided to abut against the both sides of the second transverse beam 412. Here, the transverse beam thermal insulation layer 43 has an inverted U-shaped hollow structure, which sleeves the second transverse beam 421 from top to bottom in the viewing angle of FIG. 10. In other alternative embodiments, the transverse beam thermal insulation layer 43 can also be arranged to only abut against one side of the second transverse beam 412.

The thermal insulation cotton or other materials can also be used for the transverse beam thermal insulation layer 43. The longitudinal beam 42 is provided with a longitudinal beam inner side thermal insulation layer 44 at positions corresponding to the accessory receiving space 49 and the first module receiving space 481; and the longitudinal beam inner side thermal insulation layer 44 is provided to abut against the corresponding inner side of the longitudinal beam 42. Since the longitudinal beam 42 in this embodiment includes the first longitudinal beam 421 and the second longitudinal beam 422, there are two corresponding longitudinal beam inner side thermal insulation layers 44, which respectively abut against the inner sides of the first longitudinal beam 421 and the second longitudinal beam 422. The thermal insulation cotton or other materials can be sued for the longitudinal beam inner side thermal insulation layer 44.

Since the longitudinal beam inner side thermal insulation layer 44 is provided between the first transverse beam 411 and the third transverse beam 413, the length of the longitudinal beam inner side thermal insulation layer 44 is substantially equal to a distance between the first transverse beam 411 and the third transverse beam 413. The transverse beam thermal insulation layer 43 and the longitudinal beam inner side thermal insulation layer 44 can be arranged separately, or can be integrally arranged to form one component. The transverse beam thermal insulation layer 43 and the longitudinal beam inner side thermal insulation layer 44 can be made of hard foamed cotton to facilitate the installation and disassembly.

As shown in FIG. 9, the first longitudinal beam 421 includes a hollow internal cavity; and the first longitudinal beam 421 is provided with a longitudinal beam internal cavity thermal insulation layer 45 at a position corresponding to the first module receiving space 481, and the longitudinal beam internal cavity thermal insulation layer 45 is provided in the internal cavity of the first longitudinal beam 421. The second longitudinal beam 422 has a symmetrical structure with the first longitudinal beam 421, that is, the internal cavity of the second longitudinal beam 422 at the position corresponding to the first module receiving space 481 is also provided with the longitudinal beam internal cavity thermal insulation layer 44. The longitudinal beam internal cavity thermal insulation layer 45 can be made of the hard foamed cotton and stuffed into the internal cavities of the first longitudinal beam 421 and the second longitudinal beam 422. In order to easily fix, the surface of the longitudinal beam internal cavity thermal insulation layer 45 can be coated with glue before stuffing.

In this embodiment, the outer side of the first longitudinal beam 421 is provided with a protruding portion 423. The protruding portion 423 is a mounting portion which mounts the battery pack integrally on the body of an automobile. The protruding portion 423 includes a hollow internal cavity. The first longitudinal beam 421 is provided with a longitudinal beam external cavity thermal insulation layer 46 at a position corresponding to the first module receiving space 481, and the longitudinal beam external cavity thermal insulation layer 46 is provided in the internal cavity of the protruding portion 423. The protruding portion 423 has a right triangle structure. A right-angle side of the protruding portion 423 abuts against the first longitudinal beam 421; and the hypotenuse side of the protruding portion 423 slopes up from the bottom in a direction away from the first longitudinal beam 421, that is, in the viewing angle shown in FIG. 9, the hypotenuse side of the protruding portion 423 slopes up from bottom from left to right. The protruding portion 423 can further improve the support strength of the first longitudinal beam 421. The second longitudinal beam 422 has a symmetrical structure as the first longitudinal beam 421, that is, the outer side of the second longitudinal beam 422 is also provided with a protruding portion 423, and the structure of the protruding portion 423 is symmetric with the structure of the protruding portion 423 of the first longitudinal beam 421; and the longitudinal beam external cavity thermal insulation layer 46 is provided in the internal cavity of the protruding portion 423 at a position corresponding to the longitudinal beam external cavity thermal insulation layer 46. The longitudinal beam external cavity thermal insulation layer 46 can be made of hard foamed cotton and stuffed into the internal cavities of the protruding portion 423 of the first longitudinal beam 421 and the protruding portion 423 of the second longitudinal beam 422. In order to easily fix, the surface of the longitudinal beam external cavity thermal insulation layer 46 can be coated with glue before stuffing.

Further, as shown in FIG. 10, the outside of the protruding portion 423 is provided with a longitudinal beam outside thermal insulation layer 47; and the longitudinal beam outside thermal insulation layer 47 partially covers the outer surface of the protruding portion 423 and the outer side of the longitudinal beam 42. Corresponding to the first longitudinal beam 421 and the second longitudinal beam 422, the outer side of the first longitudinal beam 421 and the outer side of the second longitudinal beam 422 are respectively provided with the longitudinal beam outside thermal insulation layers 47.

Here, only the structure of the protruding portion 423 in one embodiment is shown. In other alternative embodiments, the shape of the protruding portion 423 may be different, and the shape of the longitudinal beam outside thermal insulation layer 47 can adapt accordingly. The length of the longitudinal beam outside thermal insulation layer 47 is also substantially equal to the distance between the first transverse beam 411 and the third transverse beam 412.

As shown in FIGS. 9 and 10, the height of the transverse beam thermal insulation layer 43 is higher than the height of the second transverse beam 412, and the transverse beam thermal insulation layer 43 extends to be in contact with the upper cover 1 of the battery pack. Since high and low voltage wiring harnesses are bonded over the second transverse beam 412, and are configured to connect a battery management system (BMS) in the battery module 21 and the battery accessory 22 with the high voltage electrical box. Therefore, as shown in FIG. 11, at least one wiring slot 431 and/or at least one wiring hole 432 is provided on an upper portion of the transverse beam thermal insulation layer 43 to serve as a reserved position for the wiring harness.

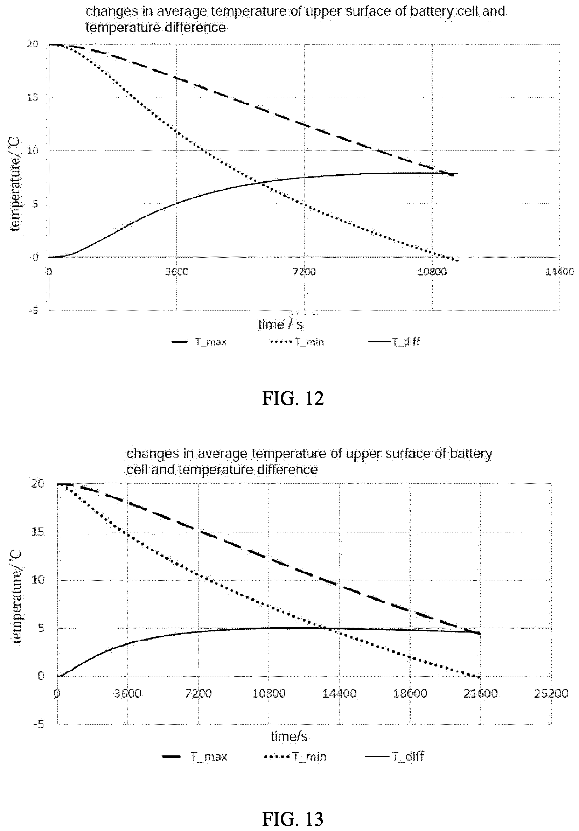

As shown in FIG. 12 and FIG. 13, which are cooling curve diagrams using the structure of the battery pack in FIG. 1 (denoted as battery pack 1 below) and the structure of the battery pack in FIG. 4 (denoted as battery pack 2 below) respectively.

The battery pack has 96 battery cells, and an average temperature of an upper surface of each battery cell is taken as the research object, so there are 96 research objects. The simulation model adopts the natural convection transient model; the battery pack is placed in the air, and the natural convection heat transfer is solved by itself. The initial temperature of the battery pack is 20°C and the environment temperature is -20°C, and the cooling curves in FIGS. 12 and 13 are obtained.

T_max indicates that there is a maximum value among the 96 research objects, that is, the maximum value of the average temperature of the upper surface of the battery cell; and T min indicates that there is a minimum value among the 96 research objects, that is, the minimum value of the average temperature of the upper surface of the battery cell, with T_diff=T_max- T_min.

The comparison data of the performances of the two battery packs obtained according to the curves is shown in Table 1 below.

**Table 1**

| | Time taken from the minimum value of the average temperature of the upper surface of the battery cells (T_min) to 0°C | Maximum temperature difference during the process (T_diff) |
|---|---|---|
| Battery pack 1 | 4.11 hours | 4.48°C |
| Battery pack 2 | 4.91 hours | 3.06°C |
| Battery pack 2 compared to battery pack 1 | Time is extended by 19.5% | Reduced by 31.7% |

It can be seen from Table 1 that the thermal insulation effect of the battery pack in this solution has been significantly improved. The battery pack 1 itself is a battery pack that adopts a structure of a thermal insulation box body in the prior art, but the battery pack 2 of the present invention can provide a better thermal insulation effect than the battery pack 1. After 4.11 hours of battery pack 1, the distribution of temperature values of the battery cells is shown in Table 2 below, in which a serial number corresponds to a serial number of each battery cell in the battery pack in FIG. 2.

**Table 2**

| Serial number | Temperature value | Serial number | Temperature value | Serial number | Temperature value | Serial number | Temperature value |
|---|---|---|---|---|---|---|---|
| 1-1 | 0 | 1-2 | 0.82 | 1-4 | 0.47 | 1-7 | 1.2 |
| 1-13 | 0.53 | 1-15 | 1.1 | 1-16 | 0.49 | 2-1 | 1.38 |
| 2-16 | 1.47 | 3-1 | 2.06 | 3-10 | 2.87 | 3-16 | 1.8 |

It can also be seen from the distribution in Table 2 that the first column of battery units, the last column of battery units, the first row of battery units and the last row of battery units are more severely affected by the temperature. The first column of battery units is more severely affected by the environment than the last column of battery units.

Therefore, the present invention provides a battery pack with a structure of a thermal insulation box body, which improves the thermal insulation effect while reducing the cost of the thermal insulation, which will achieve better and low-cost effects. This can also be obtained from the comparison of FIGS. 12 and 13 and the data in Table 1.

In conclusion, compared with the prior art, the battery pack provided by the present invention has the following advantages.

The present invention provides a battery pack with a thermal insulation box structure, which greatly improves the thermal insulation effect while reducing the cost of the thermal insulation, in which the position in the box body where the battery modules greatly affected by the environment temperature are located is insulated by using as fewer thermal insulation materials as possible as the premise, the focus is on improving battery modules with lower thermal insulation performance, so as to achieve thermal insulation and temperature equalization; the structure is simple and the practicability is strong, with little increased material cost.

The above content is a further detailed description of the present invention in combination with specific preferred embodiments, and it cannot be considered that the specific implementation of the present invention is limited to these descriptions. Those of ordinary skill in the technical field to which the present invention belongs can make a number of simple deductions or substitutions without departing from the concept of the present invention, which should be regarded as falling within the protection scope of the present invention.

## Claims

1. A battery pack, **characterized by** comprising:
a battery module, comprising a plurality of battery units arranged in an array;
a battery pack box body, comprising a plurality of transverse beams and a plurality of longitudinal beams, the plurality of transverse beams and the plurality of longitudinal beams defining a plurality of module receiving spaces, and the battery module being provided in a module receiving space; and
a lower cover thermal insulation layer, provided on a side of the battery pack box body opposite to the battery module, and a projection of the lower cover thermal insulation layer on a plane where the battery module is located at least covers outermost battery units distributed on four sides of the battery module.

2. The battery pack according to claim 1, wherein the lower cover thermal insulation layer is a ring-shaped thermal insulation layer, and the projection of the lower cover thermal insulation layer on the plane where the battery module is located covers the outermost battery units distributed on the four sides of the battery module.

3. The battery pack according to claim 1, wherein the battery pack box body further comprises an accessory receiving space, the accessory receiving space is configured to receive a battery management system and a high-voltage electrical box, the accessory receiving space is provided on a first side of the module receiving space, a projection of a first side of the lower cover thermal insulation layer on the plane where the battery module is located covers the accessory receiving space and the battery units in the battery module closest to the accessory receiving space.

4. The battery pack according to claim 3, wherein a longitudinal beam comprises a first longitudinal beam and a second longitudinal beam, a transverse beam comprises a first transverse beam, a second transverse beam and a third transverse beam which are located on a first side of the battery pack box body and arranged in sequence, the first transverse beam, the second transverse beam and the longitudinal beam are configured to define the accessory receiving space, the second transverse beam, the third transverse beam and the longitudinal beam are configured to define a first module receiving space.

5. The battery pack according to claim 4, wherein the second transverse beam is provided with a transverse beam thermal insulation layer, the transverse beam thermal insulation layer is provided to abut against a side of the second transverse beam, or the transverse beam thermal insulation layer is provided to abut against two sides of the second transverse beam.

6. The battery pack according to claim 5, wherein a height of the transverse beam thermal insulation layer is higher than a height of the second transverse beam, and the transverse beam thermal insulation layer extends to be in contact with an upper cover of the battery pack, and an upper portion of the transverse beam thermal insulation layer is provided with at least one wiring slot and/or at least one wiring hole.

7. The battery pack according to claim 5, wherein the longitudinal beam is provided with a longitudinal beam inner side thermal insulation layer at positions corresponding to the accessory receiving space and the first module receiving space, the longitudinal beam inner side thermal insulation layer is provided to abut against to an inner side of the corresponding longitudinal beam;
a length of the longitudinal beam inner side thermal insulation layer is substantially equal to a distance between the first transverse beam and the third transverse beam.

8. The battery pack according to claim 7, wherein the transverse beam thermal insulation layer and the longitudinal beam inner side thermal insulation layer are integrally provided.

9. The battery pack according to claim 7, wherein the transverse beam thermal insulation layer and the longitudinal beam inner side thermal insulation layer are respectively made of hard foamed cotton.

10. The battery pack according to claim 4, wherein the longitudinal beam comprises a hollow internal cavity, the longitudinal beam is provided with a longitudinal beam internal cavity thermal insulation layer at a position corresponding to the first module receiving space, and the longitudinal beam internal cavity thermal insulation layer is provided in an internal cavity of the longitudinal beam.

11. The battery pack according to claim 4, wherein an outer side of the longitudinal beam is provided with a protruding portion, the protruding portion is a fixing end configured to mount and fix the battery pack on a vehicle body, the protruding portion comprises a hollow internal cavity, the longitudinal beam is provided with a longitudinal beam external cavity thermal insulation layer at a position corresponding to the first module receiving space, and the longitudinal beam external cavity thermal insulation layer is provided in the internal cavity of the protruding portion.

12. The battery pack according to claim 11, wherein an outside of the protruding portion is provided with a longitudinal beam outside thermal insulation layer, the longitudinal beam outside thermal insulation layer partially covers an outer surface of the protruding portion and the outer side of the longitudinal beam;
a length of the longitudinal beam outside thermal insulation layer is substantially equal to a distance between the first transverse beam and the third transverse beam.
